# EUROPÄISCHE PATENTSCHRIFT

(11) **EP 2 981 719 B1**
(45) Veröffentlichungstag und Bekanntmachung des Hinweises auf die Patenterteilung: **18.09.2019**
(21) Anmeldenummer: 14714280.6
(22) Anmeldetag: 01.04.2014
(51) Int. Cl.: F03D 13/00

(54) **WINDENERGIEANLAGE UND VERFAHREN ZUM BETREIBEN EINER WINDENERGIEANLAGE**
WIND TURBINE AND METHOD FOR OPERATING A WIND TURBINE
ÉOLIENNE ET PROCÉDÉ DE FONCTIONNEMENT D'UNE ÉOLIENNE

(30) Priorität: 05.04.2013 DE 102013206039
(43) Veröffentlichungstag der Anmeldung: 10.02.2016
(73) Patentinhaber: Wobben Properties GmbH, 26607 Aurich (DE)
(72) Erfinder: HILLING, Christoph, 26607 Aurich (DE)
(74) Vertreter: Eisenführ Speiser
(86) Internationale Anmeldenummer: PCT/EP2014/056542
(87) Internationale Veröffentlichungsnummer: WO 2014/161862

(56) Entgegenhaltungen:
- WO-A1-2004/057182
- WO-A2-2011/131522
- DE-A1- 19 621 485
- US-A1- 2010 119 370
- Ilinca: "Analysis and Mitigation of Icing Effects on Wind Turbines", , 4. April 2011 (2011-04-04), XP002724712, Gefunden im Internet: URL:http://cdn.intechopen.com/pdfs-wm/1480 2.pdf [gefunden am 2014-05-21]

## Beschreibung

Die vorliegende Erfindung betrifft eine Windenergieanlage sowie ein Verfahren zum Betreiben einer Windenergieanlage.

Unterhalb gewisser Temperaturen kann es dazu kommen, dass eine Eisbildung an den Rotorblättern einer Windenergieanlage auftritt. Eine derartige Eisbildung bzw. Eisansatz ist nicht erwünscht, weil dies zu einer Gefährdung von Personen und Gebäuden in der Umgebung der Windenergieanlage führen kann, wenn das Eis von den Rotorblättern abfällt und durch die Gegend fliegt. Ferner führt eine Eisbildung bzw. ein Eisansatz an dem Rotorblatt einer Windenergieanlage zu einem veränderten aerodynamischen Verhalten, so dass die Windenergieanlagen nicht mehr optimal betrieben werden können.

WO 2004/104412 A1 beschreibt ein Verfahren zum Betreiben einer Windenergieanlage, wobei die Temperatur in der Umgebung der Windenergieanlage erfasst wird. Ferner werden Betriebsparameter der Windenergieanlage erfasst. Bei Abweichungen der erfassten Betriebsparameter zu gespeicherten Betriebsparametern wird die Außentemperatur überprüft. Falls die Außentemperatur unterhalb eines Grenzwertes ist, kann der Betrieb der Windenergieanlage beeinflusst werden. Falls jedoch die Temperatur oberhalb des Grenzwertes liegt, dann werden die gespeicherten Parameterwerte an die erfassten Parameter angepasst.

WO 2010/131522 A1 beschreibt ein Verfahren zum Betreiben einer Windenergieanlage, wobei die Betriebsparameter der Windenergieanlage erfasst und mit vorbestimmten Referenzgrößen verglichen werden. Wenn die Differenz zwischen erfassten Betriebsparametern und Referenzbetriebsparametern einen Grenzwert überschreitet, dann wird das Rotorblatt beheizt, um einen sich gebildeten Eisansatz zu entfernen.

In der prioritätsbegründenden deutschen Anmeldung wurden die folgenden Dokumente von dem Deutschen Patent- und Markenamt recherchiert: DE 196 21 485 A1, US 2010/0034652 A1, US 2010/0119370 und Cattin, R. et al. "Four years of monitoring a wind turbine under icing conditions", 13. International Workshop on Atmospheric Icing of Structures, 11. September 2009, 1 bis 5.

Es ist die Aufgabe der vorliegenden Erfindung, eine Windenergieanlage und ein Verfahren zum Betreiben der Windenergieanlage vorzusehen, welches eine effektivere Möglichkeit des Betriebs der Windenergieanlage auch bei niedrigen Temperaturen ermöglicht.

Diese Aufgabe wird durch eine Windenergieanlage nach Anspruch 1 sowie durch ein Verfahren zum Betreiben einer Windenergieanlage nach Anspruch 4 gelöst.

Somit wird eine Windenergieanlage mit mindestens einem Rotorblatt, einer Blattheizung zum Beheizen zumindest eines Abschnittes des mindestens einen Rotorblattes, mindestens einem Temperatursensor zum Erfassen der Außentemperatur im Bereich bzw. in der Umgebung der Windenergie, mindestens einem Luftfeuchtigkeitssensor zum Erfassen der Luftfeuchtigkeit in dem Bereich bzw. in der Umgebung der Windenergieanlage und einer Steuereinheit zum Aktivieren der Blattheizung bei Unterschreiten eines Temperaturgrenzwertes und bei Überschreiten eines Luftfeuchtigkeitsgrenzwertes, wobei der Temperaturgrenzwert +5°C beträgt und der Luftfeuchtigkeitsgrenzwert 70 % beträgt.

Gemäß einem Aspekt der vorliegenden Erfindung beträgt der Temperaturgrenzwert +2°C und der Grenzwert der Luftfeuchtigkeit beträgt ca. 95 %.

Die Erfindung betrifft ebenfalls ein Verfahren zum Betreiben einer Windenergieanlage, die mindestens ein Rotorblatt, eine Blattheizung zum Beheizen zumindest eines Abschnitts der Rotorblätter, einen Temperatursensor zum Erfassen der Außentemperatur im Bereich der Windenergieanlage, mindestens einen Luftfeuchtigkeitssensor zum Erfassen der Luftfeuchtigkeit in dem Bereich der Windenergieanlage aufweist. Die Blattheizung wird bei Unterschreiten eines Temperaturgrenzwertes und bei Überschreiten eines Luftfeuchtigkeitsgrenzwertes aktiviert. Der Temperaturgrenzwert beträgt +5°C und der Luftfeuchtigkeitsgrenzwert beträgt 70 %.

Die Erfindung betrifft ebenfalls eine Windenergieanlage mit einem Rotorblatt, einer Blattheizung zum Beheizen des Rotorblattes, einem Temperatursensor zum Erfassen der Außentemperatur im Bereich der Windenergieanlage, einem Luftfeuchtigkeitssensor zum Erfassen der Luftfeuchtigkeit im Bereich der Windenergieanlage und einer Steuereinheit zum Aktivieren der Blattheizung, wenn eine Temperatur von 2°C unterschritten wird und ein Luftfeuchtigkeitsgradient-Grenzwert überschritten wird.

Die Erfindung betrifft den Gedanken, eine Beheizung eines Rotorblattes präventiv zu aktivieren, d. h. bevor es zu einem Eisansatz bzw. einer Eisbildung an den Rotorblättern der Windenergieanlage gekommen ist. Das Aktivieren der Beheizung der Rotorblätter erfolgt in Abhängigkeit der Außentemperatur und der relativen Luftfeuchtigkeit bzw. einer Änderung der Luftfeuchtigkeit.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine Windenergieanlage gemäß der Erfindung, und
- Fig. 2: zeigt ein schematisches Blockschaltbild einer Windenergieanlage gemäß der Erfindung.

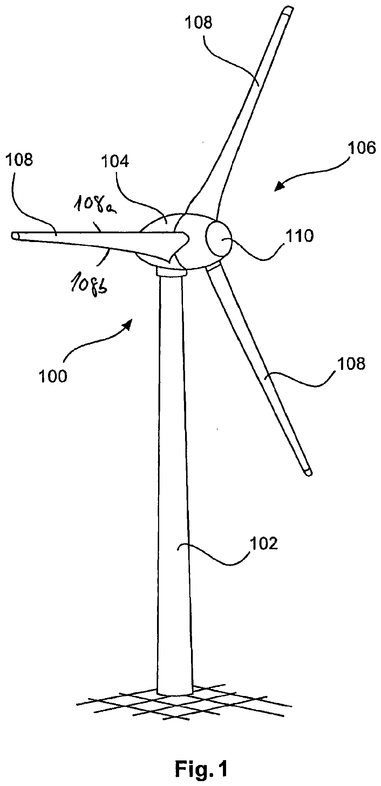

Fig. 1 zeigt eine Windenergieanlage gemäß der Erfindung. Die Windenergieanlage 100 weist einen Turm 102 und eine Gondel 104 auf. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen elektrischen Generator in der Gondel 104 an. Das Rotorblatt weist eine Vorderkante 108a und eine Hinterkante 108b auf.

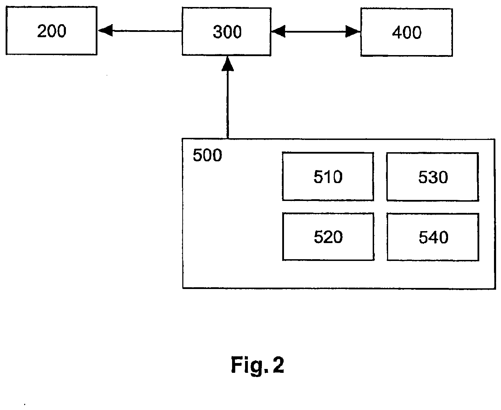

Fig. 2 zeigt ein schematisches Blockschaltbild einer Windenergieanlage gemäß der Erfindung. Die Windenergieanlage 100 gemäß der Erfindung weist einen Generator 200, eine Steuereinheit 300, eine Blattheizung 400 zum Beheizen zumindest eines Abschnitts der Rotorblätter 108 und eine Mehrzahl von Sensoren 500 auf. Die Sensoren 500 weisen mindestens einen Temperatursensor 510 zur Erfassung der Temperatur in der Nähe bzw. in der Umgebung der Windenergieanlage und einen Luftfeuchtigkeitssensor 520 auf, der zur Erfassung der Luftfeuchtigkeit in der Nähe bzw. Umgebung der Windenergieanlage 100 vorgesehen ist. Die Messergebnisse der Sensoren 500 werden an die Steuereinheit 300 weitergeleitet, welche dann basierend auf diesen Messergebnissen die Blattheizung 400 zum Beheizen der Rotorblätter 108 aktiviert.

Somit wird die Blattheizung 400 in Abhängigkeit der Außentemperatur und der relativen Luftfeuchtigkeit gesteuert bzw. aktiviert. Durch präventive Aktivierung der Blattheizung 400 kann ein Eisansatz an den aerodynamisch relevanten Bereichen des Rotorblattes verhindert werden, bevor er entsteht. Dazu wird die Blattheizung 400 aktiviert und die Rotorblätter werden zumindest an den aerodynamisch relevanten Bereichen beheizt. Dieser aerodynamisch relevante Bereich ist insbesondere der Vorderkantenbereich der Rotorblätter. Aerodynamisch weniger relevante Bereiche wie beispielsweise der Hinterkantenbereich der Rotorblätter können optional auch durch die Blattheizung 400 eisfrei gehalten werden. Dies ist jedoch lediglich optional.

Gemäß der Erfindung wird die präventive Blattbeheizung durch die Blattheizung 400 aktiviert, wenn die Steuereinheit 300 zum Steuern des Betriebs der Windenergieanlage sich in einem Automatikbetrieb befindet. Zum Beispiel können in der Steuereinheit 300 die Grenzwerte für die Luftfeuchtigkeit und die Außentemperatur abgelegt bzw. gespeichert werden. Gemäß der Erfindung wird die Blattheizung 400 bei einer Luftfeuchtigkeit von mehr als 70 % und einer Außentemperatur von < + 5°C aktiviert; optional wird die Blattheizung bei einer Außentemperatur von ≤ + 2°C und ab einer Luftfeuchtigkeit von ≥ 95 % aktiviert.

Optional können ein Luftdrucksensor 540 sowie Sensoren 530 zur Überwachung eines Zugangs zur Windenergieanlage vorgesehen werden.

Gemäß der Erfindung kann der Grenzwert für die Luftfeuchtigkeit sowie für die Außentemperatur in Abhängigkeit von dem Aufstellort der Windenergieanlage ausgewählt werden.

Je höher die Temperatur (bzw. der Grenzwert), desto eher wird die Rotorblattheizung aktiviert. Je höher die Luftfeuchte (bzw. der Grenzwert), desto später wird die Heizung aktiviert.

Optional kann der Sensor für die Außentemperatur und der Sensor für die relative Luftfeuchtigkeit (Feuchtesensor) benachbart und in der Gondel vorgesehen werden. Bei bestehenden Anlagen ist bereits ein Außentemperatursensor vorhanden, so dass lediglich ein Sensor für die relative Luftfeuchtigkeit nachgerüstet werden muss.

Gemäß der Erfindung wird die Blattheizung 400 durch die Steuereinheit 300 aktiviert, wenn die von dem Temperatursensor 510 erfasste Außentemperatur ≤ +2°C ist und die relative Luftfeuchtigkeit ≥ 70 % ist, d. h. optional wird die Blattheizung aktiviert, wenn ein Grenzwert für die Temperatur unterschritten und ein Grenzwert für die Luftfeuchtigkeit überschritten wird. Die Aktivierung der Blattheizung 400 durch die Steuereinheit 300 kann unabhängig davon erfolgen, ob die Windenergieanlage in Betrieb ist oder still steht. Vorzugsweise wird die für die Blattheizung 400 benötigte Energie zunächst von der durch die Windenergieanlage erzeugten Leistung bereit gestellt.

Die Blattheizung 400 kann insbesondere derart ausgestaltet sein, dass aerodynamisch relevante Abschnitte wie z. B. die Vorderkante 108a beheizt werden, um eine Vereisung zu vermeiden.

Gemäß der Erfindung kann der Blattheizung 400 eine maximale Leistungsaufnahme zugewiesen werden. Für den Fall, dass die Windenergieanlage nicht ausreichend elektrische Leistung liefert, z. B. weil kein Wind vorhanden ist, so kann die für die Blattheizung 400 benötigte elektrische Leistung aus dem Versorgungsnetz entnommen werden. Dies gilt jedoch nur bis zu der vorab definierten maximalen zulässigen Leistung der Blattheizung 400.

Gemäß einem Aspekt der vorliegenden Erfindung ist die Steuereinheit 300 dazu ausgestaltet, einen Eisansatz an den Rotorblättern 108 der Windenergieanlage 100 durch Abgleichen der aktuellen Leistungskurve mit einer gespeicherten Leistungskurve zu erfassen. Alternativ dazu sind andere bekannte Verfahren zur Eisansatzerkennung möglich. Wenn trotz der aktivierten präventiven Blattheizung 400 ein Eisansatz an den Rotorblättern 108 erfasst wird, dann kann die Windenergieanlage 100 notfalls gestoppt werden. In diesem Fall kann die Steuereinheit 300 von einer präventiven Blattheizungsbetriebsart in eine automatische Blattenteisung umschalten, so dass die Rotorblätter 108 durch die Blattheizung 400 enteist werden. Wenn die Blattenteisung beendet ist, dann kann die Steuereinheit 300 wieder in einen Automatikbetrieb umschalten und eine präventive Blattheizung 400 kann entsprechend der Außentemperatur und der Luftfeuchtigkeit aktiviert werden.

Gemäß einem weiteren Aspekt der vorliegenden Erfindung kann die Steuereinheit 300 die präventive Blattheizung 400 aktivieren oder deaktivieren, sobald ein Wartungsschalter eingeschaltet, ein Stoppschalter aktiviert oder wenn die Windenergieanlage durch Wartungspersonal betreten wird. Dazu können entsprechende Sensoren 530 an einem Wartungsschalter der Windenergieanlage, einem Stoppschalter oder an der Tür der Windenergieanlage vorgesehen sein. Wenn das Wartungspersonal die Windenergieanlage wieder verlassen hat und der normale Betrieb der Windenergieanlage wieder aktiviert ist, dann wird die Steuereinheit 300 die präventive Blattheizung 400 aktivieren, sofern die Außentemperatur unter den Grenzwert fällt und die relative Luftfeuchtigkeit größer als der Grenzwert ist.

Gemäß der Erfindung kann optional ein Sensor 540 zum Bestimmen des Luftdruckes in der Nähe bzw. Umgebung der Windenergieanlage vorgesehen sein. Die Steuereinheit 300 kann dazu ausgestaltet sein, in Abhängigkeit des durch den Luftdrucksensor 540 erfassten Luftdruckes den Betrieb der Blattheizung 400 zu beeinflussen.

Gemäß einem weiteren Ausführungsbeispiel aktiviert die Steuereinheit die Blattheizung, wenn die Temperatur unter einen Grenzwert von 2°C fällt und der Gradient der Luftfeuchtigkeit einen Grenzwert überschreitet. Je größer der Gradient der Luftfeuchtigkeit, desto eher muss die Blattheizung aktiviert werden. Somit wird nicht nur die Temperatur, sondern auch der Luftfeuchtigkeitsgradient, d. h. der Verlauf der Luftfeuchtigkeit über die Zeit, bei der Aktivierung der Blattheizung mit berücksichtigt.

Die Blattheizung gemäß der Erfindung kann als eine Luftheizung, als Heizmatten etc. ausgestaltet sein.

## Patentansprüche

1. Windenergieanlage (100), mit
mindestens einem Rotorblatt (108),
einer Blattheizung (400) zum Beheizen zumindest eines Abschnitts des mindestens einen Rotorblatts (108),
mindestens einem Temperatursensor (510) zum Erfassen der Außentemperatur im Bereich oder in der Umgebung der Windenergieanlage (100),
mindestens einem Luftfeuchtigkeitssensor (520) zum Erfassen der Luftfeuchtigkeit in dem Bereich oder in der Umgebung der Windenergieanlage (100), und
einer Steuereinheit (300) zum Aktivieren der Blattheizung (400) zur Prävention eines Eisansatzes an dem mindestens einen Rotorblatt, wenn die erfasste Außentemperatur kleiner als 5°C ist und wenn die erfasste Luftfeuchtigkeit größer als 70 % ist,
wobei die Steuereinheit (300) dazu ausgestaltet ist, einen Eisansatz an dem mindestens einen Rotorblatt (108) durch Abgleichen einer aktuellen Leistungskurve mit einer gespeicherten Leistungskurve zu erfassen und die Windenergieanlage zu stoppen, wenn ein Eisansatz trotz aktivierter Blattheizung (400) erfasst wird.

2. Windenergieanlage (100) nach Anspruch 1, wobei
die Steuereinheit (300) dazu ausgestaltet ist, die Blattheizung (400) zu aktivieren, wenn die erfasste Außentemperatur kleiner als +2°C ist und wenn die erfasste Luftfeuchtigkeit größer als 95 % ist.

3. Windenergieanlage nach Anspruch 1 oder 2, wobei
die Blattheizung (400) zum Beheizen einer Vorderkante des mindestens einen Rotorblatts (108) ausgestaltet ist.

4. Verfahren zum Betreiben einer Windenergieanlage mit mindestens einem Rotorblatt (108), einer Blattheizung (400) zum Beheizen zumindest eines Abschnittes des mindestens einen Rotorblattes (108), mindestens einem Temperatursensor (510) zum Erfassen der Außentemperatur im Bereich der Windenergieanlage (100) und mindestens einem Luftfeuchtigkeitssensor (520) zum Erfassen der Luftfeuchtigkeit in dem Bereich der Windenergieanlage (100), mit den Schritten:
Messen der Außentemperatur im Bereich der Windenergieanlage (100) durch mindestens einen Temperatursensor (510),
Messen der Luftfeuchtigkeit im Bereich der Windenergieanlage (100) durch den mindestens einen Luftfeuchtigkeitssensor (520) und
Aktivieren der Blattheizung (400) zur Prävention eines Eisansatzes an dem mindestens einen Rotorblatt, wenn die gemessene Außentemperatur kleiner als + 5°C ist und wenn die gemessene Luftfeuchtigkeit größer als 70 % ist, und
Erfassen eines Eisansatzes an dem mindestens einen Rotorblatt (108) durch Abgleichen einer aktuellen Leistungskurve mit einer gespeicherten Leistungskurve und
Stoppen der Windenergieanlage, wenn ein Eisansatz trotz aktivierter präventiver Blattheizung erfasst wird.

## Claims

1. Wind turbine (100), having
at least one rotor blade (108),
a blade heating system (400) for heating at least a portion of the at least one rotor blade (108),
at least one temperature sensor (510) for sensing the external temperature in the region, or in the environment, of the wind turbine (100),
at least one air humidity sensor (520) for sensing the air humidity in the region, or in the environment, of the wind turbine (100), and
a control unit (300) for activating the blade heating system (400) for preventing ice formation on the at least one rotor blade if the sensed external temperature falls below +5°C and if the sensed air humidity exceeds 70%,
wherein the control unit (300) is adapted to detect an ice formation on the at least one rotor blade (108) by comparing a current power curve with a stored power curve and to stop the wind turbine when an ice formation is detected in spite of an activated blade heating.

2. Wind turbine (100) according to Claim 1,
wherein the control unit (300) is adapted to activate the blade heating (400), when the sensed external temperature is less than +2°C and the sensed air humidity is higher than 95 %.

3. Wind turbine according to Claim 1 or 2,
the blade heating system (400) being designed to heat a front edge of the at least one rotor blade (108).

4. Method for operating a wind turbine having at least one rotor blade (108), a blade heating system (400) for heating at least a portion of the at least one rotor blade (108), at least one temperature sensor (510) for sensing the external temperature in the region of the wind turbine (100), and at least one air humidity sensor (520) for sensing the air humidity in the region of the wind turbine (100), comprising the steps:
measurement of the external temperature in the region of the wind turbine (100) by at least one temperature sensor (510),
measurement of the air humidity in the region of the wind turbine (100) by the at least one air humidity sensor (520) and
activation of the blade heating system (400) for preventing ice formation on the at least one rotor blade if the measured external temperature falls below + 5°C and if the measured air humidity exceeds 70%, and
detecting an ice formation on the at least one rotor blade (108) by comparing a current power curve with a stored power curve, and
stopping the wind turbine when an ice formation is detected in spite of an activated blade heating.

## Revendications

1. Eolienne (100) avec
au moins une pale de rotor (108),
un dispositif de chauffage de pale (400) servant à chauffer au moins une partie de l'au moins une pale de rotor (108),
au moins un capteur de température (510) servant à détecter la température extérieure dans la zone ou dans l'environnement de l'éolienne (100),
au moins un capteur d'humidité de l'air (520) servant à détecter l'humidité de l'air dans la zone ou dans l'environnement de l'éolienne (100), et
une unité de commande (300) servant à activer le dispositif de chauffage de pale (400) servant à la prévention d'une formation de givre au niveau de l'au moins une pale de rotor quand la température extérieure détectée est inférieure à 5 °C et quand l'humidité de l'air détectée est supérieure à 70 %,
dans laquelle l'unité de commande (300) est configurée pour détecter une formation de givre au niveau de l'au moins une pale de rotor (108) en comparant une courbe de puissance instantanée à une courbe de puissance mémorisée et pour arrêter l'éolienne quand une formation de givre est détectée malgré un dispositif de chauffage de pale (400) activé.

2. Eolienne (100) selon la revendication 1, dans laquelle
l'unité de commande (300) est configurée pour activer le dispositif de chauffage de pale (400) quand la température extérieure détectée est inférieure à +2 °C et quand l'humidité de l'air détectée est supérieure à 95 %.

3. Eolienne selon la revendication 1 ou 2, dans laquelle
le dispositif de chauffage de pale (400) est configuré pour chauffer un bord avant de l'au moins une pale de rotor (108).

4. Procédé servant à faire fonctionner une éolienne avec au moins une pale de rotor (108), un dispositif de chauffage de pale (400) servant à chauffer au moins une partie de l'au moins une pale de rotor (108), au moins un capteur de température (510) servant à détecter la température extérieure dans la zone de l'éolienne (100) et au moins un capteur d'humidité de l'air (520) servant à détecter l'humidité de l'air dans la zone de l'éolienne (100), avec les étapes :
de mesure de la température extérieure dans la zone de l'éolienne (100) par au moins un capteur de température (510),
de mesure de l'humidité de l'air dans la zone de l'éolienne (100) par l'au moins un capteur d'humidité de l'air (520), et
d'activation du dispositif de chauffage de pale (400) servant à la prévention d'une formation de givre au niveau de l'au moins une pale de rotor quand la température extérieure mesurée est inférieure à +5 °C et quand l'humidité de l'air mesurée est supérieure à 70 %, et
de détection d'une formation de givre au niveau de l'au moins une pale de rotor (108) en comparant une courbe de puissance instantanée à une courbe de puissance mémorisée, et
d'arrêt de l'éolienne quand une formation de givre est détectée malgré un dispositif de chauffage de pale préventif activé.
